Europäisches Patentamt

European Patent Office

Office européen des brevets

(11) Publication number: **0 408 761 A1**

(12) **EUROPEAN PATENT APPLICATION**
**published in accordance with Art.**
**158(3) EPC**

(21) Application number: 90901664.4

(22) Date of filing: 06.01.90

(86) International application number:
PCT/JP90/00008

(87) International publication number:
WO 90/08017 (26.07.90 90/17)

(51) Int. Cl.⁵: **B25J 19/06**

(30) Priority: 18.01.89 JP 7636/89

(43) Date of publication of application:
23.01.91 Bulletin 91/04

(84) Designated Contracting States:
DE FR GB

(71) Applicant: FANUC LTD.
3580, Shibokusa Aza-Komanba, Oshino-mura
Minamitsuru-gun, Yamanashi 401-05(JP)

(72) Inventor: MIZUNO, Toru Room 901,
Seisekisakuragaokapakuhomuzu 294-1,
Ichinomiya
Tama-shi Tokyo 206(JP)
Inventor: ITO, Takayuki Fanuc Dai-3
Vira-karamatsu
3527-1, Shibokusa Oshino-mura
Minamitsuru-gun
Yamanashi 401-05(JP)

(74) Representative: Billington, Lawrence Emlyn
HASELTINE LAKE & CO Hazlitt House 28
Southampton Buildings Chancery Laneane
London WC2A 1AT(GB)

(54) METHOD OF SAFELY OPERATING A ROBOT.

(57) This invention relates to a method of safely operating a robot capable of easily effecting a restorative operation for resetting an automatically set override value to the initial value at a moment when the robot operation mode is switched. When a regenerative operation of the robot is interrupted by some cause, the operator changes the mode into a manual operation mode (S2) in order to restore the robot operation. A robot controller stores the override value at a moment when the regenerative operation is interrupted and indicates this by flashing (S9 to S11), and further automatically sets the override value to a predetermined small value (S12). Further, when the operator operates an override increase key or a decrease key (S1) immediately after the restart of the regenerative operation, the predetermined small override value is automatically changed into the override value that was stored when the regenerative operation was interrupted and the flash indication of the override value is turned off (S14, S16). During the manual operation, furthermore, when a predetermined period of time has lapsed from the moment the manual operation instruction was input and the time of the timer started from the moment of the input has lapsed (S6), the override value of when the time has lapsed is stored and is

indicated by flashing (S9 to S11), and a predetermined small override value is automatically set (S12).

FIG.2

# S P E C I F I C A T I O N
## METHOD OF SAFETY ROBOT OPERATION
### Technical Field

The present invention relates to a method of safety robot operation, and more particularly, to a method of safety robot operation, in which an override value for deciding a robot operation speed can be automatically set to a small value at the time of robot operation mode change, thereby ensuring safe operation of a robot, and the override value can be easily restored to an original value at the time of restoration to an original operation mode.

### Background Art

In general, a robot can be operated in either an automatic operation mode or a manual operation mode, and has an override function for operating a robot at a speed equal to the product of an operation speed assigned by a program and an override value (%) assigned by an operator's manual operation. Normally, the override value is set to 100% or a large value so that the robot is operated at the speed assigned by the program or a speed in the vicinity thereof in the automatic operation mode, while the override value is set to a small value so that the robot is safely operated at a low speed in the manual mode.

In the robot of the aforesaid type, if the operation of the robot is stopped due to any operation errors, e.g., a mistake in handling assembly parts by means of a robot hand, during the automatic operation, the robot is manually operated for restoration work. More specifically, the operator sets the override value to a small value, and then restores the robot to its operation start position (original position) by manual operation (JOG operation). In doing this, the operator sometimes may confusedly fail to perform an operation for reducing the override value, or may operate a JOG button different from a JOG button used to select the desired direction of manual operation. In such a case, the robot may operate at high speed or in the direction opposite to the desired manual operation direction, so that the robot hand may run into jigs, thus damaging the robot or its peripheral equipment.

Further, if the operator wrongly selects the position for the start of playback operation, in changing the operation mode to the automatic operation mode to cause the robot to perform the playback operation, after finishing teaching to the robot in the manual operation mode, the robot operates in an unexpected direction at the start of the playback operation, resulting in the same awkward situation as aforesaid.

Conventionally, in order to prevent this, the override value is automatically set to 50% or less at the time of operation mode change. In this case, however, the operator must accomplish a complicated restoration work to reset the override value to a desired value.

## Disclosure of the Invention

The object of the present invention is to provide a method of safety robot operation, capable of easily performing restoring operation for resetting an override value, automatically set at the point of time of robot operation mode change, to an original value.

In order to achieve the above object, a method of safety operation for a robot operated at a speed corresponding to a set override value, according to the present invention, comprises steps of: (a) storing an override value at the time of changing a robot operation mode; (b) automatically setting a predetermined small override value as the set override value at the time of the operation mode change; and (c) automatically resetting the override value stored in the step (a) as the set override value when a modification command is entered.

According to the present invention, as described above, the override value is automatically set to the predetermined small value at the time of the operation mode change, and the override value stored at the point of time of the operation mode change is automatically reset as the set override value in response to the modification command entered thereafter. Accordingly, safety is ensured at the time of the operation mode change, and the override value can be easily restored to its original value.

### Brief Description of the Drawings

Fig. 1 is a schematic block diagram showing an industrial robot for effecting a method of safety robot operation according to one embodiment of the present invention; and

Fig. 2 is a flow chart illustrating the operation of the robot of Fig. 1.

### Best Mode of Carrying Out the Invention

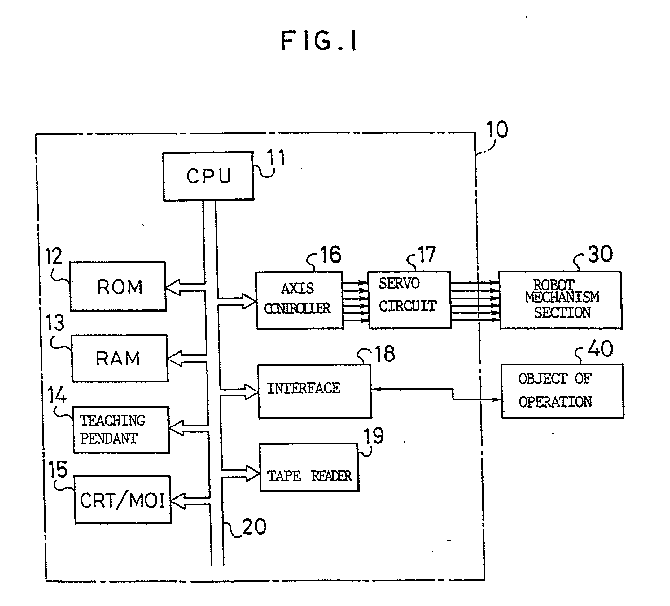

Referring to Fig. 1, a robot comprises a control device 10 and a robot mechanism section 30 for performing operations for an object 40 of operation under the control of the control device 10. The control device 10 comprises a central processing unit (hereinafter referred to as CPU) 11, a read-only memory (ROM) 12 stored with various control programs executed by the CPU 11, and a random access memory (RAM) 13 for storing robot operating programs, and also comprises a teaching pendant 14, which includes a numerical

- 4 -

indicator, an indicator lamp, robot operating buttons, etc., and a manual data input device (hereinafter referred to as CRT/MDI) 15, which includes a CRT display unit, a robot operation mode selector key, alphanumeric keys, cursor keys, various function keys, etc. The control device 10 further comprises an axis controller 16 including an interpolator, a servo circuit 17 connected thereto, an interface 18 connected to the object 40 of operation, and a tape reader 19. These elements 12 to 16, 18, and 19 are connected individually to the CPU 11 by means of busses 20. The RAM 13 is arranged to store command data for a robot, prepared by an operator using the teaching pendant 14 and/or the CRT/MDI 15, and servomotors for various axes of the robot mechanism section 30 are arranged to be driven in accordance with a servo circuit output delivered under the control of the CPU 11.

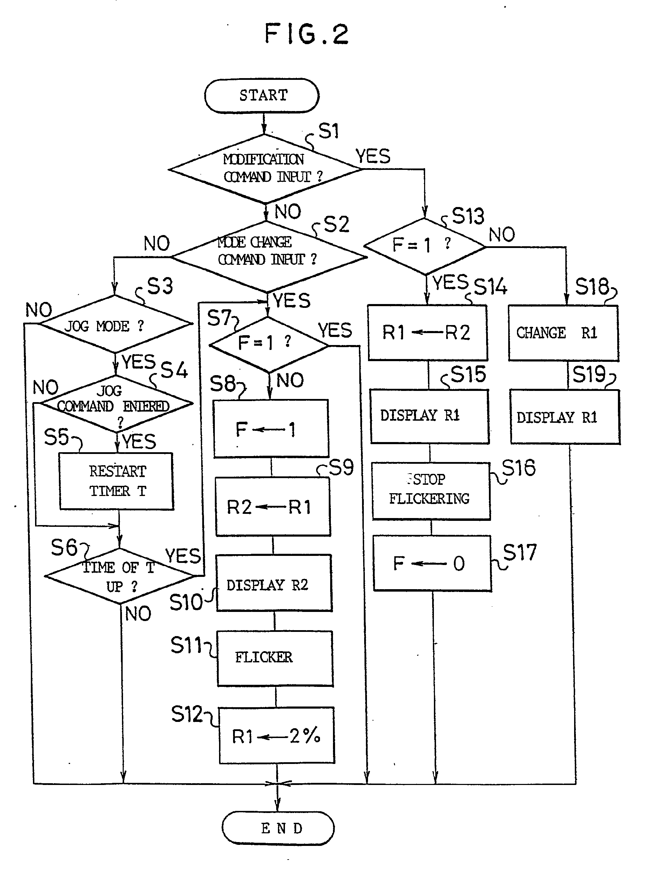

Referring now to Fig. 2, the operation of the robot of Fig. 1 will be described.

Here let it be supposed that the operator has already finished teaching to the robot so that the robot can be automatically operated in a playback mode.

During the operation of the robot, the CPU 11 executes the processes of Fig. 2 at intervals of a predetermined period. First, the CPU 11 determines whether a modification command for modifying a set override value is entered by checking to see if an override value incrementing or decrementing key on the teaching pendant 14 is operated (Step S1). If there is no entry of the modification command, the CPU 11 determines whether a mode change command is entered by checking to see if the mode selector key for changing the robot operation mode is operated (Step S2). More specifically, the CPU 11 determines whether the operation mode is changed from the playback mode to a teaching mode (JOG mode) or from the teaching mode to the playback mode, or whether the coordinate selection for jogging is changed in the JOG mode. If there is no entry of the mode change command, the CPU 11 determines whether the current operation mode is the JOG mode (Step S3). If all of the results of decision in Steps S1 to S3 are negative, then the processes of Fig. 2 for the period concerned are finished.

If the robot operation stops for any reason, thereafter, the operator changes the playback mode over to the JOG mode (manual feed mode) in order to restore the robot operation. In a detection period immediately after this mode change, the CPU 11 concludes in Step S1 that the modification command is not entered, and then detects the entry of the mode change command in the next Step S2. In this case, the CPU 11 determines whether a flag F, which functions as control information for the processes of Fig. 2, is set to the value "1" (Step S7). The initial value of the flag F is set to the value "0," so that the CPU 11 concludes that the flag F here is not at the value "1," and sets the flag F to the value "1" (Step S8). Then, the CPU 11 stores a second register R2 with a value stored in a first register R1, indicative of the currently set override value (e.g., 80%), that is, the override value obtained at the point of time of interruption of the playback operation (Step S9), causes a liquid crystal display unit (LCD) of the teaching pendant 14 to display the stored value in the register R2 (Step S10), and then causes this displayed value to flicker (Step S11). Further, the CPU 11 stores the first register R1 with a predetermined small override value (e.g., 2%) as a set override value (Step S12), whereupon the process of Fig. 2 for the detection period immediately after the mode change are finished.

In the subsequent detection periods, the results of decision in Steps S1 and S2 are negative, while the result of decision in Step S3 is positive, so that the program proceeds to Step S4 mentioned later. In accordance with the results of decision in Steps S4 and S6, their corresponding processes of Steps S5 to S7 mentioned later are executed. The stored values in the registers R1 and R2 cannot be changed by the execution of Steps S4 to S7.

In the end, after the playback mode is changed over to the JOG mode, the robot is operated at a low speed which is equivalent to the product of a speed assigned by the program and an override value of e.g. 2%, and an override value of e.g. 80% for the time of mode change is displayed flickeringly. In order to restore the robot to a position for the start of the playback operation, the operator operates a JOG button on the teaching pendant 14 or another control panel (not shown) to drive the robot in a required operating direction. In doing this, if the operator wrongly operates another JOG button, thereby causing the robot to operate in the opposite direction, the robot operates still at the low speed corresponding to the override value of e.g. 2%, so that the wrong operation can be corrected by operating the required JOG button. In consequence, the robot and its peripheral equipment cannot be damaged by the wrong operation.

Thereafter, when the JOG mode is changed over to the playback mode after the robot is restored to the position for the start of the playback operation by manual operation at the aforesaid low speed, the CPU 11 detects this in Step S2 for the detection period immediately after the mode change, and concludes in the next Step S7 that the flag F is set to the value "1." As a result, the processing for the detection period immediately after the mode change is finished without reducing the override value or flickeringly displaying the current override value in Steps S8 to S12 mentioned before. Subsequently, when the operator operates the override value incrementing or decrementing key, the CPU 11 detects the entry of the modification command in Step S1 for the detection period immediately after the key operation, and concludes in the next Step S13 that the flag F is set to the value "1." In this case, the CPU 11 stores the first register R1 again with an override value of e.g. 80% obtained at the point of time of interruption of the playback operation, stored in the second register R2, as a set override value, causes the override value to be displayed on the liquid crystal display unit of the teaching pendant 14 (Steps S14 and S15), further cancels the flickering operation of the liquid crystal display unit (Step S16), and resets the flag F to the value "0" (Step S17).

As a result, the override value obtained at the point of time of interruption of the playback mode is automatically reset in the first register R1 at the restart of the playback operation, and the operator need not reset the override value. Thereafter, the robot is operated at an operating speed corresponding to this override value. When the operator operates the override value incrementing or decrement key, moreover, the CPU 11 detects the entry of the modification command in Step S1 for the detection period immediately after the key operation, and concludes in the next Step S13 that the flag F is not at the value "1." In this case, the CPU 11 updates the set override value stored in the first register R1, which determines the playback operation speed, in response to key operation (Step S18), and causes the liquid crystal display unit to display the register value after the updating (Step S19).

If necessary, the operator can change the override value before the restart of the playback mode, in the JOG mode. In this case, the operator operates the override value incrementing or decrementing key. The CPU 11 detects the entry of the modification command in Step S1 for the detection period immediately after the key operation, concludes in the next Step S13 that the flag F is set to the value "1," and executes Steps S14 to S17. As a result, the override value of e.g. 2%, automatically set at the start of the JOG mode, is restored to the override value of e.g. 80% stored at the point of time of interruption of the playback mode. When the operator operates the override value incrementing or decrementing key, thereafter, the CPU 11 executes Steps S18 and S19. Namely, the CPU 11 causes the stored value in the first register R1 to be updated and displayed in response to the key operation.

Subsequently, when the JOG mode is changed over to the playback mode by the operator's operation, the CPU 11 detects the entry of the mode change command in Step S2 for the detection period immediately after the mode change, and concludes in the next Step S7 that the value of the flag F is not "1." In this case, the CPU 11 executes Steps S8 to S12. As a result, the override value updated during the operation in the JOG mode is stored in the second register R2 and displayed flickeringly, and also, the robot is operated at low speed at the restart of the playback operation. Thereafter, Steps S14 to S17 are executed in response

- 9 -

to the operation of the override value incrementing or decrementing key, and the robot is operated at a speed corresponding to the override value after the aforesaid updating.

The CPU 11 periodically executes the processes of Fig. 2 even during the operation in the JOG mode (manual feed mode). As already described in brief, moreover, the CPU 11 concludes in Step S3 that the robot is being operated in the JOG mode. In this case, the CPU 11 determines whether a JOG command for manual feed operation is entered (Step S4), and causes a timer T, formed of e.g. a software timer, to restart every time the JOG command is entered (Step S5). Further, the CPU 11 determines whether the set time of the timer T is up for each detection period (Step S6), and the program proceeds to Step S7 if the set time of the timer T is up. After the playback mode is changed over to the JOG mode, as already described in brief, it is concluded in Step S7 that the value of the flag F is "1," so that no substantial processing is performed.

Meanwhile, if the robot is first operated in the JOG mode to be given an instruction before the playback operation, for example, no mode change is made yet before the operation in the JOG mode. In this case, the JOG command is entered at time intervals longer than the timer time set in the timer T. When the set time of the timer T is up, therefore, it is concluded in Step S7 that the value of the flag F is "0," so that Steps S8 to S12 are executed. Thus, the current override value associated with the JOG command entered last is automatically changed to e.g. 2 % so that the robot is operated at low speed, and the operator can be prevented from making errors in the manual feed operation. At this time, the operator,

- 10 -

after ensuring safety, operates the override value incrementing or decrementing key as required to restore the override value to the original set value, and further to change the override value as required.

In starting the playback operation after finishing giving the aforesaid instruction to the robot in the JOG mode, the value of the flag F is generally reset to "0." Thus, the playback operation is started at a low speed corresponding to the override value of e.g. 2%, so that the safety can be ensured.

CLAIMS

1. A method of safety operation for a robot operated at a speed corresponding to a set override value, comprising steps of:

(a) storing an override value at the time of changing a robot operation mode;

(b) automatically setting a predetermined small override value as said set override value at the time of said operation mode change; and

(c) automatically resetting the override value stored in said step (a) as said set override value when a modification command is entered.

2. A method of safety robot operation according to claim 1, wherein said override value stored in said step (a) is displayed flickeringly.

3. A method of safety robot operation according to claim 1 or 2, wherein said override value reset in said step (c) is displayed.

4. A method of safety robot operation according to claim 1, further including steps of:

(d) storing an override value obtained after the passage of a predetermined time when the next manual operation command is not entered before said predetermined time elapses from an instant at which a manual operation command is entered, during the operation of said robot in a manual operation mode;

(e) automatically setting said predetermined small override value as said set override value when said predetermined time has elapsed; and

(f) automatically resetting the override value stored in said step (d) as said set override value when said modification command is entered during the operation of said robot in said manual operation mode.

5. A method of safety robot operation according to claim 4, wherein said override value stored in said step (d) is displayed flickeringly.

6.   A method of safety robot operation according to claim 4 or 5, wherein said override value reset in said step (f) is displayed.

# FIG.1

# FIG.2

```
                    ┌─────────────┐
                    │    START    │
                    └──────┬──────┘
                           │
                        ╱──┴──╲  S1
                     ╱─         ─╲          YES
                   ╱ MODIFICATION  ╲─────────────────┐
                   ╲ COMMAND INPUT? ╱                 │
                     ╲─          ─╱                    │
                        ╲──┬──╱                        │
                           │ NO                     ╱──┴──╲  S13
                        ╱──┴──╲  S2                ╱        ╲      NO
              NO     ╱─         ─╲              ╱  F = 1 ?    ╲───────────┐
          ┌────────╱ MODE CHANGE  ╲           ╲              ╱            │
          │        ╲ COMMAND INPUT?╱            ╲─        ─╱              │
          │          ╲─          ─╱               ╲──┬──╱                 │
          │             ╲──┬──╱                      │ YES  S14        S18│
       ╱──┴──╲ S3          │ YES          S7         ▼                   ▼
NO   ╱─       ─╲        ╱──┴──╲        ╱──┴──╲   ┌─────────┐     ┌──────────┐
┌───╱ JOG MODE? ╲      ╱        ╲ YES ╱        ╲  │ R1 ◄─ R2│     │CHANGE R1 │
│   ╲          ╱      ╱  F = 1 ?  ╲──┐╲        ╱  └────┬────┘     └─────┬────┘
│     ╲─    ─╱        ╲          ╱  │ ╲      ╱        │ S15            │ S19
│        ╲┬╱            ╲─    ─╱    │   ╲──╱      ┌────┴─────┐    ┌─────┴─────┐
│         │ YES S4         ╲┬╱ NO   │           │DISPLAY R1│    │ DISPLAY R1│
│      ╱──┴──╲         S8   │       │           └────┬─────┘    └─────┬─────┘
│NO  ╱─       ─╲       ┌────┴───┐   │              │ S16              │
├───╱ JOG       ╲      │ F ◄─ 1 │   │          ┌────┴─────┐           │
│   ╲ COMMAND ENTERED╱ └────┬───┘   │          │  STOP    │           │
│     ╲    ?   ─╱           │       │          │FLICKERING│           │
│        ╲┬╱ YES            │ S9    │          └────┬─────┘           │
│      S5 │            ┌────┴───┐   │             │ S17              │
│   ┌─────┴────┐       │ R2 ◄─R1│   │          ┌────┴───┐            │
│   │ RESTART  │       └────┬───┘   │          │ F ◄─ 0 │            │
│   │ TIMER T  │            │       │          └────┬───┘            │
│   └─────┬────┘       ┌────┴─────┐ │               │                │
│  S6     │            │DISPLAY R2│ │               │                │
│   ╱─────┴─╲ YES      └────┬─────┘ │               │                │
│ ╱ TIME OF T ╲──────┐   S10│       │               │                │
│ ╲   UP ?   ╱       │  ┌────┴───┐  │               │                │
│   ╲──┬──╱          │  │ FLICKER│  │               │                │
│      │ NO       S11│  └────┬───┘  │               │                │
│      │             │  ┌────┴─────┐│               │                │
│      │          S12│  │ R1 ◄─ 2% ││               │                │
│      │             │  └────┬─────┘│               │                │
└──────┴─────────────┴───────┼──────┴───────────────┴────────────────┘
                             │
                     ┌───────┴──────┐
                     │    E N D     │
                     └──────────────┘
```

# INTERNATIONAL SEARCH REPORT

International Application No PCT/JP90/00008

## I. CLASSIFICATION OF SUBJECT MATTER (if several classification symbols apply, indicate all) 6

According to International Patent Classification (IPC) or to both National Classification and IPC

Int. Cl$^5$     B25J19/06

## II. FIELDS SEARCHED

### Minimum Documentation Searched 7

| Classification System | Classification Symbols |
|---|---|
| IPC | B25J9/16 - 9/22, 19/00 - 19/06, G05B9/02, 19/19, 19/42 |

### Documentation Searched other than Minimum Documentation to the Extent that such Documents are Included in the Fields Searched 8

| | |
|---|---|
| Jitsuyo Shinan Koho | 1926 - 1989 |
| Kokai Jitsuyo Shinan Koho | 1971 - 1989 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 63-204302 (Fuji Electric Co., Ltd.), 24 August 1988 (24. 08. 88), Page 1, lower left column, lines 5 to 11 (Family: none) | 1 |
| Y | JP, A, 62-107308 (Hitachi, Ltd.), 18 May 1987 (18. 05. 87), Page 1, lower left column, lines 4 to 20 (Family: none) | 1 |
| Y | JP, A, 59-116802 (Hitachi, Ltd.), 5 July 1984 (05. 07. 84), Page 1, lower left column, lines 5 to 11 (Family: none) | 1 |
| Y | JP, A, 59-81094 (Hitachi, Ltd.), 10 May 1984 (10. 05. 84), Page 1, lower left column, lines 4 to 13 (Family: none) | 1 |
| Y | JP, U, 59-1591 (Honda Motor Co., Ltd.), 7 January 1984 (07. 01. 84), (Family: none) | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| March 23, 1990 (23. 03. 90) | April 9, 1990 (09. 04. 90) |

| International Searching Authority | Signature of Authorized Officer |
|---|---|
| Japanese Patent Office | |

Form PCT/ISA/210 (second sheet) (January 1985)

| | | |
|---|---|---|
| FURTHER INFORMATION CONTINUED FROM THE SECOND SHEET | | |
| A | JP, A, 60-62482 (Fanuc Ltd.),<br>10 April 1985 (10. 04. 85),<br>(Family: none) | 1 |
| A | JP, A, 60-3715 (Hitachi, Ltd.),<br>10 January 1985 (10. 01. 85),<br>(Family: none) | 1 |
| A | JP, A, 58-212871 (Shin Meiwa<br>Industry Co., Ltd.),<br>10 December 1983 (10. 12. 83),<br>(Family: none) | 1 |

**V.☐ OBSERVATIONS WHERE CERTAIN CLAIMS WERE FOUND UNSEARCHABLE [1]**

This international search report has not been established in respect of certain claims under Article 17(2) (a) for the following reasons:

1.☐ Claim numbers .........., because they relate to subject matter not required to be searched by this Authority, namely:

2.☐ Claim numbers ......, because they relate to parts of the international application that do not comply with the prescribed requirements to such an extent that no meaningful international search can be carried out, specifically:

3.☐ Claim numbers ............, because they are dependent claims and are not drafted in accordance with the second and third sentences of PCT Rule 6.4(a).

**VI.☐ OBSERVATIONS WHERE UNITY OF INVENTION IS LACKING [2]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)